# EUROPEAN PATENT SPECIFICATION

(11) **EP 0 519 133 B1**
(45) Date of publication and mention of the grant of the patent: **13.08.1997**
(21) Application number: 91305629.7
(22) Date of filing: 21.06.1991
(51) Int. Cl.: G11B 27/036

(54) **Method and apparatus for automatically inserting program titles in VCR**
Methode und Apparat zur automatischen Einsetzung von Titeln in einem VCR
Méthode et appareil pour insérer automatiquement les titres des programmes dans un magnétoscope

(43) Date of publication of application: 23.12.1992
(73) Proprietor: GOLD STAR CO. LTD, Seoul (KR)
(72) Inventor: Oh, Yong Gyu, Dougjak-ku, Seoul (KR)
(74) Representative: Bridge-Butler, Alan James

(56) References cited:
- EP-A- 0 051 259
- FR-A- 2 586 879
- GB-A- 2 101 795
- PATENT ABSTRACTS OF JAPAN vol. 14, no. 348 (E-957)(4291) 27 July 1990 & JP-A-2 121 482

## Description

### BACKGROUND OF THE INVENTION

### Field of the Invention

The present invention relates to method and apparatus for automatically inserting program titles in VCR, and more particularly to method and apparatus for automatically inserting program titles in predetermined positions between title start and end points of assembly-edited recorded contents in VCR.

### Description of Prior Art

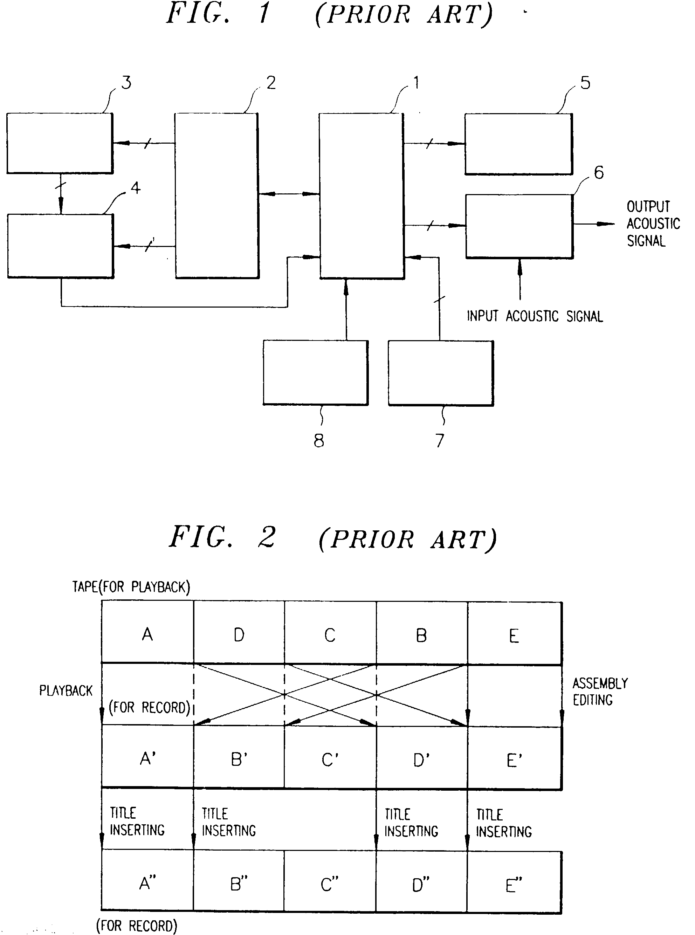

Referring to FIG. 1, there is shown a conventional VCR with a function of assembly editing recorded contents. The VCR comprises a timer microprocessor 1 for counting output signals from a capstan frequency signal generator or a reel pulse generator (not shown) which constitute a part of VCR mechanism 4 for carrying out inserting, ejecting, loading and unloading operations for a VCR tape; a system control unit 2 adapted for continuously communicating with said timer microprocessor and generating control signals so that the VCR can accomplish normal functions (Play, Fast Forward, Rewind and Reverse modes); and a servo system 3 for controlling the speed and phase of VCR mechanism 4 according to the control of said system control unit 2 so that the VCR mechanism 4 can carry out inserting, ejecting, loading and unloading operations for VCR tape, in accordance with the control of said servo system 3. The VCR also comprises a display unit 5 for displaying function conditions of VCR and time; an on-screen display control circuit 6 for displaying characters by its overlapping on a screen played back from a VCR tape according to the control of timer microprocessor 1 or on a TV screen displayed through a tuner; a key signal input unit 7 for supplying various key signals for assembly editing recorded programs and automatically serving titles into respective recorded programs; and a remote controller signal receiving unit 8 for receiving various signals outputted from a remote controller (not shown) to perform required functions and for transmitting them to the timer microprocessor 1. The assembly editing procedure for recorded programs in the above-mentioned arrangement will now be described in conjunction with FIG. 2.

First, when respective recorded programs which have been recorded according to the order of A, D, C, B and E are desired to be edited according to the order of A, B, C, D and E, they are played back according to the original recording order while start point and end point of each recorded program is reset in the order desired, according to the assembly program. Thereafter, the programs are recorded again.

At this time, the start and end points of each recorded program is determined by using counted values of the timer microprocessor 1 counting output signals from a real time counter or reel pulse counter which outputs respective time signals converted from frequency signals generated by a capstan. If a title should be inserted into the screen of each program, under the condition that the assembly editing of recorded programs is executed according to the order desired, as above-mentioned, the title inserting position is accurately preset on the screen of each recorded program by using a jog or shuttle disposed at external while the programs are played back. Then, the title making routine of the on-screen display main routine is executed to make the title of each recorded program. The formed title is inserted in the preset title inserting position, and then the recording of program is executed.

Thereafter, respective recorded contents in which titles have been inserted are played back according to the order of A, B, C, D and E.

The above-mentioned prior art requires one recording process for assembly editing recorded programs according to the order desired, which programs were originally recorded in the VCR tape according to the certain order, and another recording process for inserting respective titles in the predetermined positions of respective assembled programs. As a result, the obtained screen quality becomes poor since the title-inserted programs are obtained by the twice recordings.

Furthermore, there is an inconvenience, because for accomplishing the functions for assembly editing and title inserting of recorded programs, all steps of assembly editing recorded programs, presetting respective title inserting positions of programs, making titles and playing back respective title-inserted programs are manually and repeatedly carried out.

### SUMMARY OF THE INVENTION

Therefore, an object of the present invention is to overcome the disadvantages encountered in the above-mentioned prior art and to provide a method and an apparatus for automatically inserting program titles in VCR, which utilizes a memory for title data store and predetermined assembly programs so that in assembly editing several recorded programs according to the order desired, a title of each recorded program can be automatically inserted in a predetermined position, thereby avoiding any poor screen quality caused by repeated playback and recording of programs.

In order to accomplish the above object the present invention provides an apparatus for automatically inserting program titles in a VCR comprising a timer microprocessor adapted for capstan frequency signals or reel pulses generated from a VCR mechanism equipped in said VCR and generating a control signal in response to an externally inputted key signal to execute an assembly program to reorder programs recorded according to an original recording order into another recording order and to insert titles in respective recorded programs, a system control adapted for serially communicating with said timer microprocessor and outputting a control signal to a VCR servo system and to said VCR mechanism, an on-screen display control circuit adapted for inserting said titles in predetermined screens of recorded programs according to said control signal from the timer microprocessor, and a display unit adapted for displaying function conditions of VCR and time in accordance with the control signal from the timer microprocessor, said apparatus being characterised in that it further comprises;
a memory adapted for storing, under the control of said timer microprocessor and in accordance with said externally inputted key signals to the timer microprocessor, data determining a title, a title inserting start display time and a title inserting stop display time for any of the programs recorded in the original recording order during playback in the original order whereby, the timer microprocessor and the system control unit can record several recorded programs in a desired order different from the original recording order and simultaneously execute assembly programs for inserting the stored titles in the respective programs between the respective title inserting start display time and the respective title inserting stop display time by using the data stored in said memory.

The present invention also provides a method for automatically inserting titles in predetermined screens of recorded programs in a VCR which includes a timer microprocessor continuously counting capstan frequency signals or reel pulses generated from a VCR mechanism, a system control unit serially communicating with said timer microprocessor and outputting a predetermined control signal to a VCR servo system and to said VCR mechanism and a memory, the method comprising:
a first step of playing back several recorded programs of a VCR tape according to an original recording order, detecting start and end times of respective recorded programs by using counted values from the timer microprocessor and in response to externally inputted key signals during the playback determining a title inserting start display time and a title inserting stop display time in any of said recorded programs and then storing the thus determined title inserting start and stop display times and the detected start and end times of the recorded programms in said memory;
a second step of forming respective titles of recorded contents by executing a title forming routine of on-screen display main routine according to the inputted key signal and storing the written titles in said memory; and
a third step of assembling the recorded programs in a desired order different from said original order by using said stored start and end times of the recorded programs according to a predetermined assembly program, and simultaneously inserting the respective stored titles in the respective reordered recorded programs from the respective title inserting start display time to the respective title inserting stop display time.

### BRIEF DESCRIPTION OF THE DRAWINGS

FIG. 1 is a block diagram showing a VCR control circuit according to the prior art;
FIG. 2 is a view explaining a conventional method for inserting titles in a VCR;
FIG. 3 is a block diagram showing a VCR control circuit according to the present invention;
FIG. 4 is a view explaining the inner format of a non-volatile RAM according to the present invention;
FIG. 5 is a circuit diagram of a key unit according to the present invention;
FIG. 6 is a view showing the arrangement of keys on the outer panel of a remote controller according to the present invention;
FIGS. 7A TO 7D show screens produced with respect to the title forming in on-screen display routine;
FIG. 8 is a view explaining a method for automatically inserting titles in a VCR, in accordance with the present invention;
FIGS. 9A to 9D are flowcharts showing overall steps of the method for automatically inserting titles in a VCR, in accordance with the present invention;
FIG. 10A is a flowchart showing the title displaying step of the automatic title inserting method according to the present invention; and
FIG. 10B is a flowchart showing the title data storing step of the automatic title inserting method according to the present invention.

### DETAILED DESCRIPTION OF THE PREFERRED EMBODIMENTS

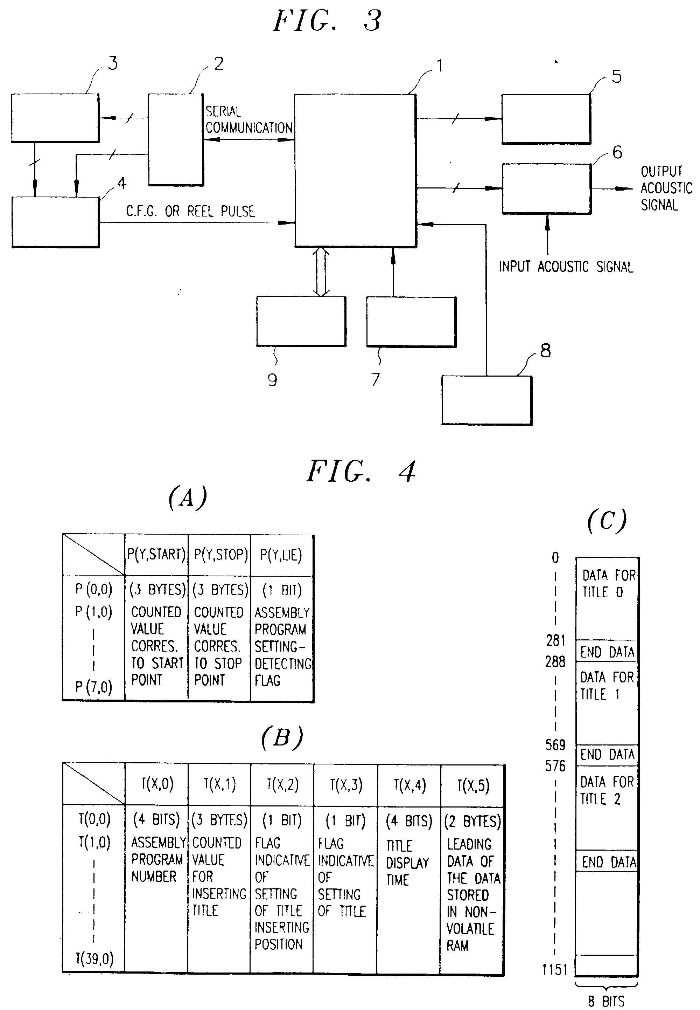

The present invention will now be explained in conjunction with an embodiment shown in FIGS. 3 to 7.

Referring to FIG. 3, there is shown a block diagram of an apparatus for automatically inserting titles in a VCR, in accordance with the present invention. The apparatus comprises a timer microprocessor 1 which counts values corresponding to time by utilizing capstan frequency signals or reel pulses generated from a VCR mechanism equipped in the VCR. The timer microprocessor 1 generates a control signal in response to a key signal inputted from external to execute an assembly program and automatically insert titles in predetermined positions of respective recorded programs. The apparatus also comprises a system control unit 2 which communicates continuously with the timer microprocessor 1 and outputs a control signal to a VCR servo system and the VCR mechanism. A servo system 3 controls the speed and phase of VCR mechanism, according to the control of the system control unit 2. The VCR mechanism which is designated by reference numeral "4" can carry out inserting, ejecting, loading and unloading operations for a VCR tape, in accordance with the control of said servo system 3. The apparatus also comprises a display unit 5 for displaying function conditions of VCR and time, an on-screen display control circuit 6 for overlapping and displaying characters on a screen played back from a VCR tape according to the control of timer microprocessor 1, a key signal input unit 7 for supplying various key signals for assembly editing recorded programs and inserting titles into respective recorded programs, a remote controller signal receiving unit 8 for receiving various signals outputted from a remote controller (not shown) and for transmitting them to the timer microprocessor 1, and a non-volatile RAM 9 connected to the timer microprocessor 1 and adapted to store and output data for titles according to the control of the timer microprocessor 1.

The apparatus with the above arrangement of the present invention is distinguished from the prior art, in that the non-volatile RAM 9 for storing title data is additionally provided.

FIGS. 4A to 4C show the inner map format of the non-volatile RAM 9. Referring to FIG. 4A, there is shown the format of a part of the inner map of non-volatile RAM 9 for storing data adapted to execute the assembly program. The format includes portions P(Y, start) and P(Y, stop) for storing counted values of predetermined bits, for example 3 bytes, (counted values from the timer microprocessor) corresponding to respective start and end points of recorded programs (in this case, 8 programs) and a portion P(Y, LIE) of storing 1 bit flags indicative of the setting of respective assembly programs for recorded programs.

Referring to FIG. 4B, there is shown the map format of other part of the inner map of non-volatile RAM 9 for storing respective title data. The format includes a portion T(X, 0) for storing assembly program numbers of 4 bits for respective recorded programs, a portion T(X, 1) for storing counted values of 3 bytes supplied from the timer microprocessor 1 and corresponding to start and end points of the screens of respective recorded programs in which titles are inserted, respectively, a portion T(X, 2) for storing flags of 1 bit indicative of the setting of respective title inserting positions for several recorded programs during the execution of assembly program for assembly editing the recorded programs according to the order desired, a portion T(X, 3) for storing flags of 1 bit indicative of the setting of titles executed according to the title setting function of on-screen display menu routine, a portion T(X, 4) for storing the title displaying time of 4 bits, and a portion T(X, 5) for storing 2 byte leading data of each title data stored in the addressed memory location of non-volatile RAM 9.

In this case, the non-volatile RAM 9 according to the present invention has the format enabling the insertion of 40 titles, and thus the value of X can be 0 to 39. On the other hand, the value of Y is 0 to 8, because the number of recorded programs is 8.

FIG. 4C shows address compartments of the non-volatile RAM 9 corresponding to respective title data, in accordance with the present invention. Each address compartment which stores each corresponding title data includes 288 addresses. 8 last addresses of 288 addresses are adapted to divide adjacent two title data.

The number of address compartments is determined by the number of screens for displaying respective titles. In the present embodiment, 40 address compartments are provided and a RAM of 3K bytes capacity is used for the non-volatile RAM 9.

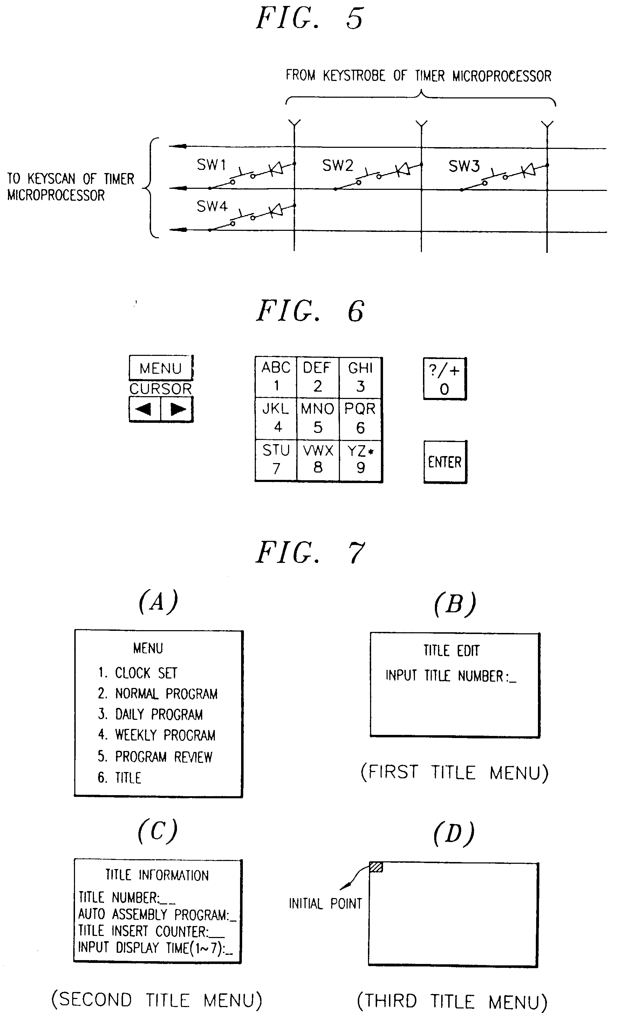

Referring to FIG. 5, there is shown a detailed circuit of the key unit 7 which constitutes a part of the arrangement shown in the block diagram of FIG. 3 and provides key signals for executing assembly programs and automatically inserting titles, to the timer microprocessor 1. The key unit 7 includes an assembly program set/normal select key SW1, an assembly program enter key SW2, an automatic title insert key SW3, and an assembly program start key SW4.

In this case, it is noted that the automatic title insert key SW3 is additionally provided for executing assembly programs and automatically inserting titles at the same time, as distinguished from the prior art.

Upon pressing the automatic title insert key SW3 in the setting of assembly program for arranging several recorded programs according to the order desired, the timer microprocessor 1 shown in FIG. 3 stores the counted values (that is, capstan frequency signals or reel pulses) in the non-volatile RAM 9 so as to set the screen areas of respective recorded programs in which titles are inserted, respectively. Also, indexes are provided in the screens of respective recorded programs in which titles are inserted, so that title editing can be carried out in executing the title function routine of on-screen display routine.

FIG. 6 shows keys provided on the outer panel of remote controller outputting predetermined signals so as to output signals for automatically inserting titles.

FIGS. 7A to 7D show screens displayed by executing the on-screen display routine in a well-known manner. Referring to FIG. 7A, there is shown a main menu for the on-screen display. If No. 6, TITLE function is selected, the first title screen as shown in FIG. 7B is displayed. When a desired title number is inputted in the first title screen of FIG. 7B, the second title screen is displayed which is adapted for obtaining information about the title corresponding to the inputted number, as shown in FIG. 7C. As the assembly program number informing of the recorded program in which title is inserted, counted value (reel pulse or capstan frequency) corresponding to the predetermined position of screen in which title is inserted and title display time are inputted, a third title screen is produced in which initial cursor for the title edition is displayed, as shown in FIG. 7D.

Upon pressing ENTER key shown in FIG. 6 after the completion of title edition, the process of title editing is completed.

As apparent from the above description, it is needed to provide a remote controller including numeral keys, character keys, cursor arrow keys and MENU key.

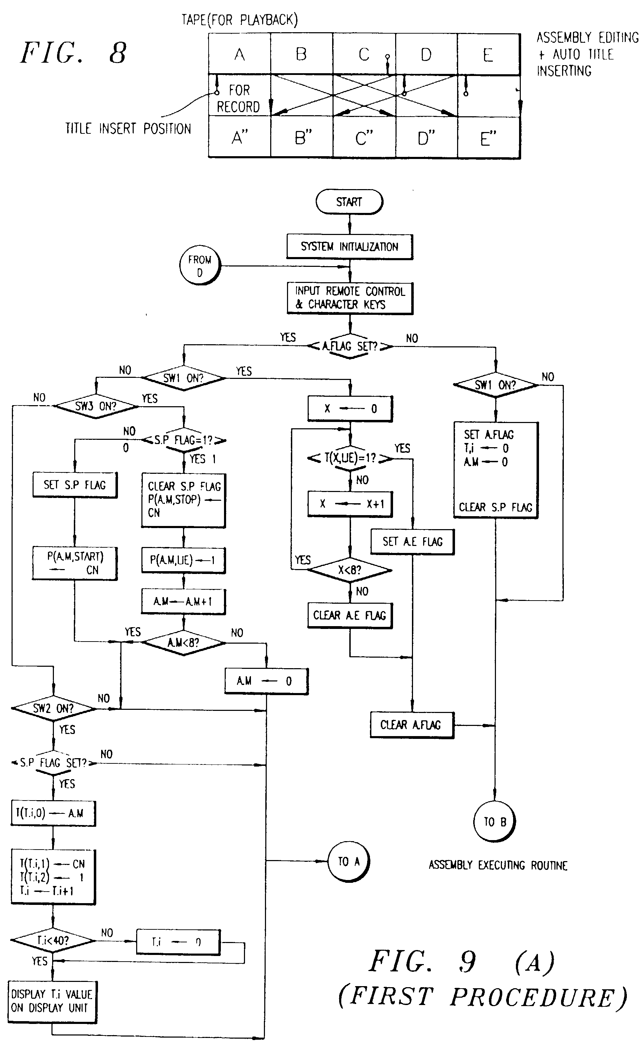

The method for automatically inserting titles in VCR according to the present invention will now be described in conjunction with FIGS. 8 to 10.

FIG. 8 schematically shows the process of automatic and simultaneous assembly edition and title insertion of recorded programs. During the playback of programs which was recorded according to the order of A, B, C, D and E, start and end points of each recorded program is detected by using the counted values from the title microprocessor 1 and at the same time start and end points for inserting a title in each recorded programs. During the recorded programs are edited and recorded again according to the desired order of for example, A'', B'', C'', D'' and E'', titles obtained from the title editing routine of on-screen display (OSD) routine are simultaneously automatically inserted in the predetermined positions, respectively.

Accordingly, it is possible to accomplish both the assembly edition and the title insertion by one playback and recording.

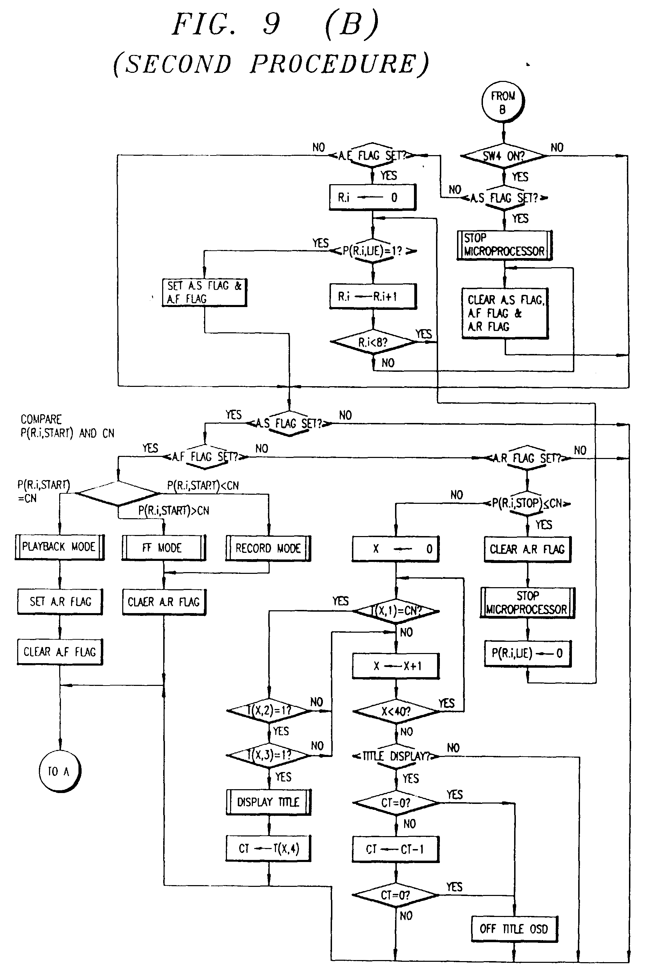

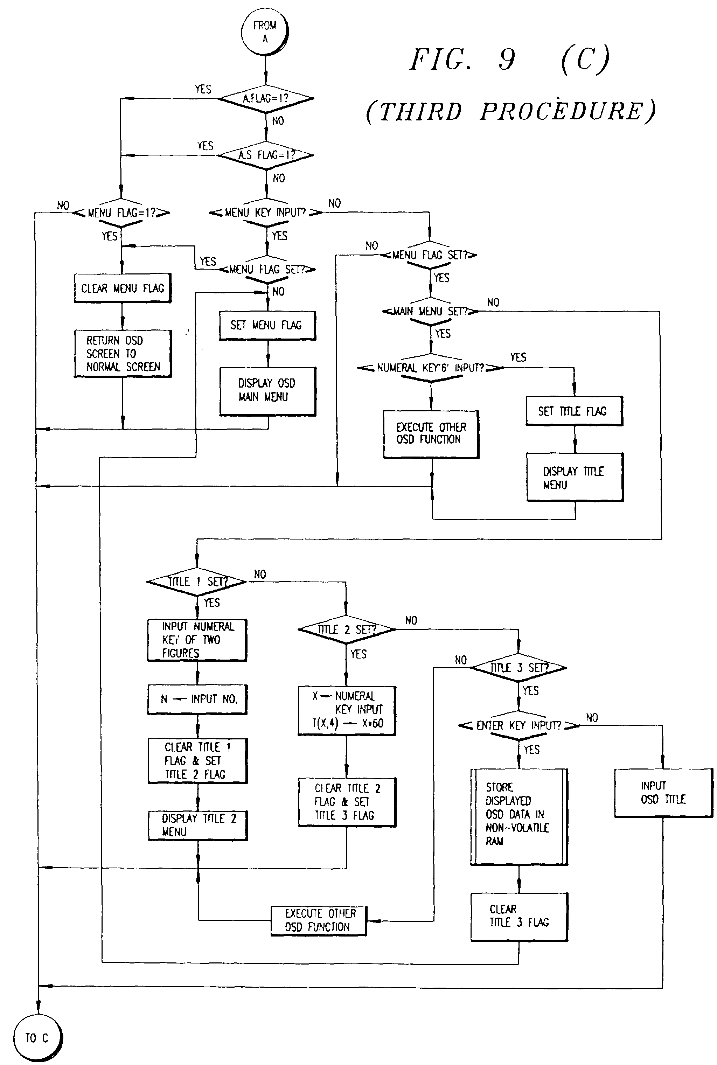

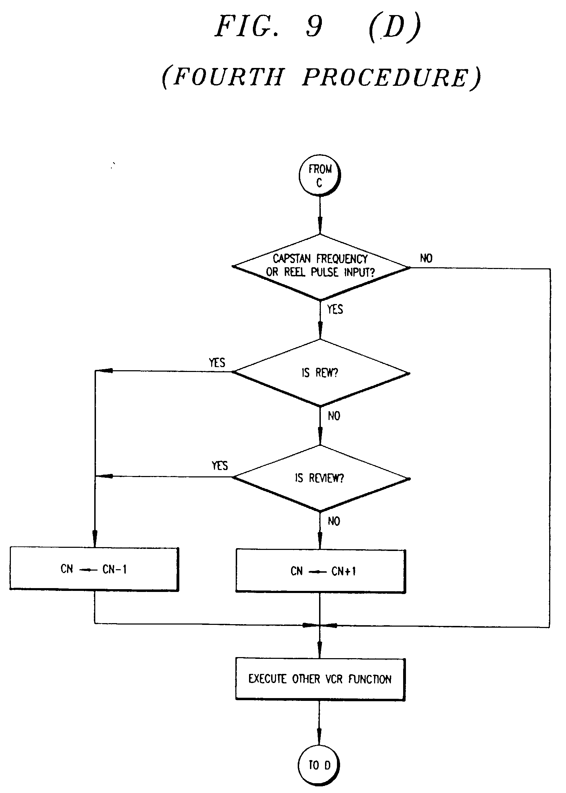

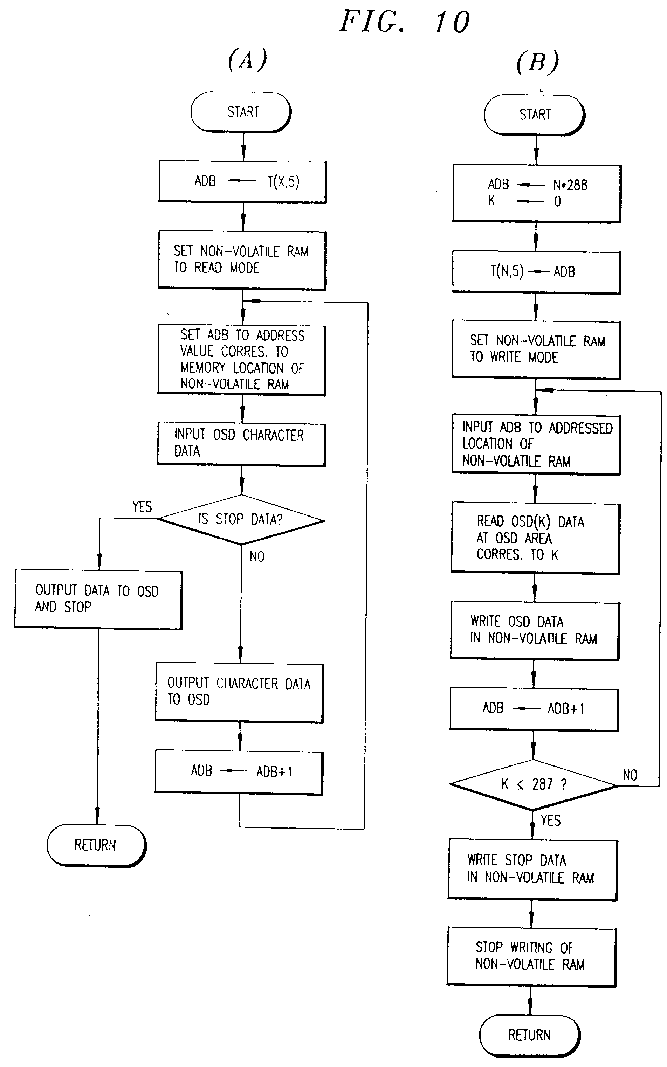

The present invention will be described in conjunction with flowcharts shown in FIGS. 9 and 10.

Prior to the description, reference characters indicated in the flowcharts are briefly explained as follows: S.P FLAG designates a start point flag, T,i a title index buffer, A.M an assembly menu numeral buffer, P( , ) an array RAM of RAM 9 having assembly data, T( , ) an array RAM having title data, X, K and N RAM buffers, A.S FLAG an assembly start flag, A.E FLAG an assembly enable flag, A.F FLAG a first set flag of assembly start counter, A.R FLAG an assembly playback preparation flag, CT a title display time counter, R,i an assembly preparation index buffer, and CN a counter which constitutes a part of the VCR mechanism 4 of FIG. 3 and counts capstan frequency signals or reel pulses generated from the VCR mechanism 4. Also, menu FLAG designates flag indicative of the setting of on-screen display routine, and Title 1, Title 2 and Title 3 designate the reversed conditions into the first, the second and the third title screens illustrated in FIG. 7, respectively.

FIG. 9A shows the first procedure for setting the assembly program in accordance with the operating conditions of the assembly set switch SW1, the automatic title insert switch SW2 and the assembly enter switch SW3, which operations are carried out in accordance with a well-known diode matrix arrangement as shown in FIG. 5. FIG. 9B shows the second procedure for executing assembly programs in accordance with the operation condition of start switch SW1. FIG. 9C shows the third procedure for editing titles in the on-screen display routine, depending on the setting of assembly flag A.FLAG and assembly enable flag A.E FLAG. On the other hand, FIG. 9D shows the fourth procedure for counting capstan frequency signals or reel pulses by the timer microprocessor 1 shown in FIG. 3.

In executing the second procedure shown in FIG. 9B, a title display procedure proceeds as follows. That is, the content of RAM T(X, 5) having the format of FIG. 4 is stored in the predetermined register ADB, as shown in FIG. 10A. Then, the non-volatile RAM 9 is set to operate in read mode, and the value of a register ADB is set to the address value corresponding to memory location of the non-volatile RAM 9. After the input of on-screen display character data, the timer microprocessor 1 detects whether the data is stop data. If the data is stop data, character data is outputted to the on-screen display control unit 6 shown in FIG. 3. Thus, the procedure is completed. If not, the present on-screen display character data is outputted to the on-screen display control unit 6, and then the value of register ADB is increased by "1". Thereafter, the procedure returns to the step of setting the value of a register ADB to the address value corresponding to memory location of the non-volatile RAM 9.

In executing the third procedure shown in FIG. 9C, a procedure for storing title data in the non-volatile RAM 9 proceeds as follows. As shown in FIG. 10B, the product of the stored value in RAM buffer N by 288 is stored in a predetermined register ADB. After clearing RAM buffer K, the content of the register ADB is stored in the RAM portion T(X,5). Subsequently, the non-volatile RAM 9 is set to operate in write mode, and the value of register ADB is inputted to the addressed memory location of the non-volatile RAM 9. Then, the on-screen display data is read at the on-screen display area corresponding to the content of RAM buffer K and written in the non-volatile RAM 9. After increasing the values of register ADB and RAM buffer K by "1", the timer microprocessor 1 detects whether the content of RAM buffer K is 287. If not 287, the procedure returns to the step of inputting the value of register ADB to the addressed memory location of the non-volatile RAM 9. If the content of RAM buffer K is 287, stop data is inputted to the non-volatile RAM 9. Then, the writing of non-volatile RAM 9 is completed and the procedure returns to previous procedure.

Overall procedures will now be described, in conjunction with FIGS. 9A and 9B.

First, the setting of assembly program is executed by the operations of assembly set switch SW1, automatic title insert switch SW2 and assembly enter switch SW3 according to the diode matrix arrangement shown in FIG. 5.

Upon receiving a predetermined signal, accordingly, the timer microprocessor 1 detects whether assembly flag A.FLAG has been initially set. If assembly flag A.FLAG has not been initially set, the timer microprocessor 1 detects whether the assembly set switch SW1 is in its ON state. If the assembly set switch SW1 is not in its ON state, the timer microprocessor 1 clears flags and buffers relating to the assembly program and then sets assembly flag A.FLAG so as to execute the assembly executing routine.

However, if assembly flag A.FLAG has been initially set and the assembly set switch SW1 is in its ON state, the timer microprocessor 1 changes the value X of the RAM portion T(X, LIE) having the arrangement shown in FIG. 4 over the range of 0 to 7 and detects the conditions of respective flags during the change. If either one of flags is 1, assembly enable flag A.E FLAG is set. On the other hands, if there is no flag of 1, the timer microprocessor 1 clears assembly enable flag A.E FLAG and then assembly flag A.FLAG. Thereafter, The procedure returns to the assembly executing routine.

On the other hand, if the assembly enter switch SW3 shown in FIG. 5 is in its On state and start point flag S.P FLAG is 0, under the condition of the setting of assembly flag A.FLAG, the timer microprocessor 1 sets the start point flag S.P FLAG and stores the present counted value from the counter CN in the counter P(A.M, START) which counts the start of the program corresponding to assembly menu number A.M. If start point flag S.P FLAG has been set, the timer microprocessor 1 clears the start point flag S.P FLAG and then sets the counter P(A.M, STOP) adapted to stop the program designated by the buffer(A.M), to the present counted value from the counter CN. At this time, boundary detection is executed, because of 8 assembly programs.

On the other hand, the automatic title insert switch SW2 is also in its ON state and the start point flag S.P FLAG has been set, the timer microprocessor 1 stores the present counted value from the counter CN in the RAM portion T(T.i, 1) and inputs "i" to the RAM portion T(T.i, 2) so as to inform that an assembly automatic title has been set. Then, the timer microprocessor 1 increases the value of title index buffer T.i, where T.i means the title message number of the portion set to title index.

Thereafter, the set title index value is displayed by the display unit 5 and then the procedure proceeds to the title editing procedure of on-screen display routine.

The procedure executing assembly programs is executed by the assembly program start switch SW4. If the switch SW4 is in its ON state, the timer microprocessor 1 detects whether the assembly start flag A.S FLAG has been set.

If the assembly start flag A.S FLAG has been set, the timer microprocessor 1 operates in its stop mode and clears flag relating to the assembly execution. Then, the process returns to the title editing procedure. On the other hand, if the assembly start flag A.S FLAG has not been set, the timer microprocessor 1 detects whether the assembly enter flag A.E FLAG has been set. If the assembly enter flag A.E FLAG has been set, the timer microprocessor 1 stores "0" in the assembly preparation index buffer R.i and detects whether the value of RAM portion P(R.i, LIE) is 1, while increasing the value of the assembly preparation index buffer R.i to 7.

When the value of RAM portion R(P.i, LIE) is 1, the timer microprocessor 1 sets the assembly start flag A.S FLAG and then the assembly start counter flag A.F FLAG, so as to execute next procedure. On the other hand, if the value of RAM portion P(P.i, LIE) is 0, all flags relating to the assembly execution are cleared.

If the assembly start flag A.S FLAG has been set, the timer microprocessor 1 detects whether the assembly start counter flag A.F FLAG has been set. If not set, the process returns to the procedure for detecting whether the assembly playback preparation flag A.R FLAG has been set. If the assembly start counter flag A.F FLAG has been set, the timer microprocessor 1 compares the counted value from the counter P(R.i, START) adapted to start the program corresponding to the index R,i to start the present assembly and the present counted value from the capstan frequency and reel pulse counter CN.

That is, when P(R.i, START) > CN, Fast Forward operation FF is carried out until the counted value reaches the start counted value. Then, the assembly playback preparation flag A.R FLAG is cleared and the timer microprocessor 1 returns to its title edition mode. When P(R.i, START) < CN, the tape is rewound until the counted value reaches the start counted value. Then, the timer microprocessor 1 clears the assembly playback preparation flag A.R FLAG and returns to its title edition mode. On the other hand, if P(R.i, START) = CN, the tape is played back. Then, the timer microprocessor 1 sets the assembly playback preparation flag A.R FLAG and clears the assembly start counter flag A.F FLAG. Thereafter, the timer microprocessor 1 returns to its title edition mode.

When the assembly start counter flag A.F FLAG has been set, the timer microprocessor 1 also compares the counted value from the counter P(R.i, STOP) and the present counted value from the counter CN. If P(R.i, STOP) ≤ CN, the timer microprocessor 1 clears the assembly playback preparation flag A.R FLAG and reverses its operation mode to stop mode. Then, the presently executed assembly program is deleted so as to make P(R.i, LIE) be "0". Thereafter, the timer microprocessor 1 increases R.i and detects whether next program should be executed.

However, if P(R.i, STOP) > CN, the timer microprocessor 1 makes X be "0" and compares the counted value from title index buffer T(X, 1) and the present counted value from the counter CN. If both values are the same, the timer microprocessor 1 detects whether title insert position has been set during the title assembly ( T(X, 2) = 1? ) and whether title has been set by the on-screen display routine ( T(X, 3) = 1? ). If set commonly, the title display routine shown in FIG. 10A is executed and the display time Y(X, 4) is stored in the display counter CT.

When T(X, 1) is not the same as CN, the timer microprocessor 1 detects continuously the value of X while increasing it up to 40. Unless corresponding to the above-mentioned condition, the counted value from display counter CT is decreased. When the counted value from display counter CT is "0", the display is OFF.

In executing the title display procedure in the on-screen display routine, the timer microprocessor 1 detects whether the assembly enable flag A.E FLAG has been set. If set, the timer microprocessor 1 detects the menu flag state informing of the execution of on-screen display routine. If the menu flag state is detected, the on-screen display routine is initialized so as to display a normal screen. Then, the reel pulse and capstan frequency counting routine is executed.

However, when the assembly flag A.FLAG and the assembly enable flag A.E FLAG have been cleared, the menu key is operative to select or exit the main menu as shown in FIG. 7A. Upon inputting the signal from remote controller numeral key "6" shown in FIG. 6, in the main menu state, the first title screen shown in FIG. 7B can be displayed. Upon inputting the signal from the title index key and then the signal from the numeral key of two figures in the first title mode, the timer microprocessor 1 stores them the RAM buffer N. Then the second title screen is displayed.
On the third title screen shown in FIG. 7D, the menu of the second title screen as shown in FIG. 7C is displayed and the title display time is inputted. At this time, the title display time is multiplied by 60 seconds and the resultant value is stored in the RAM portion T(X, 4), as display counted value. Thereafter, the third title screen is displayed.

The operation relating to the third title screen shown in FIG. 7D is carried out in the same manner as that in the normal title setting mode. upon inputting the signal from the enter key shown in FIG. 6, however, the title displayed on the present screen is stored in the non-volatile RAM 9 shown in FIG. 3, according to the program shown in FIG. 10B. At this time, leading data of the stored data is stored in the RAM portion T(X, 5).

During the execution of the counting routine, the leading edge of inputted capstan frequency or reel pulse is detected so that the counted value from the counter CN is decreased in the rewind mode REW and the review mode REVIEW and increased by "1" in other modes. Then, the procedure returns to the key input routine.

As apparent from the above description, the present invention enables easy selection of portions of respective recorded programs in which titles are inserted, respectively, during the execution of assembly programs and automatic insertion of respective titles in predetermined positions, which titles are produced in the on-screen display routine. Consequently, the title inserting is very easily accomplished and at a time, thereby avoiding any poor screen quality.

## Claims

1. A method of automatically inserting titles in predetermined screens of recorded programs in a VCR which includes a timer microprocessor (1) continuously counting capstan frequency signals or reel pulses generated from a VCR mechanism (4), a system control unit (2) serially communicating with said timer microprocessor and outputting a predetermined control signal to a VCR servo system (3) and to said VCR mechanism and a memory (9), the method comprising:
a first step of playing back several recorded programs of a VCR tape according to an original recording order, detecting start and end times of respective recorded programs by using counted values from the timer microprocessor and in response to externally inputted key signals during the playback determining a title inserting start display time and a title inserting stop display time in and of said recorded programs and then storing the thus determined title inserting start and stop display times and the detected start and end times of the recorded programms in said memory;
a second step of forming respective titles of recorded contents by executing a title forming routine of on-screen display main routine according to the inputted key signal and storing the written titles in said memory; and
a third step of assembling the recorded programs in a desired order different from said original order by using said stored start and end times of the recorded programs according to a predetermined assembly program, and simultaneously inserting the respective stored titles in the respective reordered recorded programs from the respective title inserting start display time to the respective title inserting stop display time.

2. An apparatus for automatically inserting program titles in a VCR, comprising a timer microprocessor (1) adapted for counting capstan frequency signals or reel pulses generated for a VCR mechanism (4) equipped in said VCR and generating a control signal in response to an externally inputted key signal to execute an assembly program to reorder programs recorded according to an original recording order into another recording order and to insert titles in respective reordered recorded programs, a system control unit (2) adapted for serially communicating with said timer microprocessor and outputting a control signal to a VCR servo system (3) and to said VCR mechanism, an on-screen display control circuit (6) adapted for inserting said titles in predetermined screens of recorded programs according to said control signal from the timer microprocessor, and a display unit (5) adapted for displaying function conditions of VCR and time in accordance with the control signal from the timer microprocessor, said apparatus being characterised in that it further comprises:
a memory adapted for storing, under the control of said timer microprocessor (1) and in accordance with said externally inputted key signals to the timer microprocessor, data determining a title, a title inserting start display time and a title inserting stop display time for any of the programs recorded in the original recording order during playback in the original order whereby the timer microprocessor and the system control unit can record several recorded programs in a desired order different from the original recording order and simultaneously execute assembly programs for inserting the stored titles in the respective programs between the respective title inserting start display time and the respective title inserting stop display time by using the data stored in said memory.

3. An apparatus in accordance with Claim 2, wherein said memory comprises a first part (Fig. 4A) which includes:
a first portion (P(Y,START)) for storing counted values from said timer microprocessor corresponding to respective start points of several recorded programs, a second portion (P(Y,STOP)) for storing counted values from said timer microprocessor corresponding to respective end points of said recorded programs, a third portion (P(Y,LIE)) for storing flags indicative of the setting of respective assembly programs for respective recorded programs;
a second part (Fig. 4B) for storing data adapted to execute assembly programs, said second part including a fourth portion (T(X,0)) for assembly numbers of respective recorded programs, a fifth portion (T(X,1)) for counted values from the timer microprocessor corresponding to said respective title inserting start and stop display times in which respective titles of recorded programs are inserted, a sixth portion (T(X,2)) for storing flags indicative of the setting of said respective title inserting start and stop display times of recorded programs, a seventh portion (T(X,3)) for storing flags indicative of the setting of the respective titles of recorded programs, an eighth portion (T,X4)) for storing respective title display times of recorded programs and a ninth portion (T(X,5)) for storing leading data of respective stored title data of recorded programs;
and a third part (Fig. 4C) for storing said title data.

## Patentansprüche

1. Ein Verfahren zum automatischen Einfügen von Titeln in festgelegte Bildschirme von aufgezeichneten Programmen in einem Videorecorder, der folgendes umfaßt: einen Taktgeber-Mikroprozessor (1), der fortlaufend Capstan-Frequenzsignale oder Spulen-Impulse zählt, die von einem Videorecorder-Mechanismus (4) erzeugt werden; eine System-Steuereinheit (2), die seriell mit dem Taktgeber-Mikroprozessor kommuniziert und ein vorbestimmtes Steuersignal an ein Videorecorder-Stellsystem (3), an den Videorecorder-Mechanismus und an einen Speicher (9) ausgibt, wobei das Verfahren folgendes umfaßt:
einen ersten Schritt für die Wiedergabe mehrerer aufgezeichneten Programme eines Videorecorderbandes in Übereinstimmung mit einer ursprünglichen Aufzeichnungsreihenfolge, die Erfassung von Start- und Stoppzeiten der jeweiligen aufgezeichneten Programme unter Verwendung gezählten Werte des Taktgeber-Mikroprozessors und die Bestimmung - als Reaktion auf während der Wiedergabe eingegebene externe Schlüsselsignale - einer Titel-Einfügungs-Startanzeigezeit und einer Titel-Einfügungs-Stoppanzeigezeit im aufgezeichneten Programm und des aufgezeichneten Programmes, und dann das Speichern der somit bestimmten Titel-Einfügungs-Start- und -Stoppanzeigezeiten und der erfaßten der Start- und Stoppzeiten dieser aufgezeichneten Programme im Speicher;
einen zweiten Schritt zur Bildung jeweiliger Titel der aufgezeichneten Inhalte, indem eine Titelbildungs-Routine einer Bildschirm-Anzeige-Hauptroutine in Übereinstimmung mit dem eingegebenen Schlüsselsignal ausgeführt wird und zum Speichern der geschriebenen Titel im Speicher; und
einen dritten Schritt zur Zusammenstellung der aufgezeichneten Programme in einer gewünschten Reihenfolge, die sich von der ursprünglichen Reihenfolge unterscheidet, unter Verwendung der gespeicherten Start- und Stoppzeiten der aufgezeichneten Programme in Übereinstimmung mit einem vorbestimmten Zusammenstellungsprogramm und gleichzeitiges Einfügen der jeweiligen gespeicherten Titel in die jeweiligen wiedergeordneten aufgezeichneten Programmen von der jeweiligen Titel-Einfügungs-Startanzeigezeit bis hin zu der jeweiligen Titel-Einfügungs-Stoppanzeigezeit.

2. Ein Gerät zum automatischen Einfügen von Programmtiteln in einen Videorecorder, das folgendes umfaßt:
einen Taktgeber-Mikroprozessor (1), der für das Zählen von Capstan-Frequenzsignalen oder Spulen-Impulsen ausgebildet ist, die für einen Videorecorder-Mechanismus (4), der im Videorecorder eingesetzt ist, erzeugt werden, und der ein Steuersignal als Reaktion auf ein extern eingegebenes Schlüsselsignal erzeugt, um ein Zusammenstellungsprogramm zur Wiederordnung aufgezeichneten Programme von einer ursprünglichen Aufzeichnungsreihenfolge in eine andere Aufzeichnungsreihenfolge durchzuführen, und um Titel in die jeweils wiedergeordneten Aufzeichnungsprogramme einzufügen,
eine System-Steuereinheit (2), die dazu ausgebildet ist, mit dem Taktgeber-Mikroprozessor seriell zu kommunizieren, und ein Steuersignal an ein Videorecorder-Stellsystem (3) und an den Videorecorder-Mechanismus auszugeben,
eine Bildschirmanzeige-Steuerschaltung (6), die dazu ausgebildet ist, die Titel in vorbestimmte Bildschirme von aufgezeichneten Programmen in Übereinstimmung mit dem Steuersignal des Taktgeber-Mikroprozessors einzufügen, und
eine Anzeigeeinheit (5), die dazu Ausgebildet ist, Funktionsbedingungen des Videorecorders und die Zeit in Übereinstimmung mit dem Steuersignal des Taktgeber-Mikroprozessors anzuzeigen, wobei das Gerät dadurch gekennzeichnet ist, daß es ferner folgendes umfaßt:
einen Speicher, der dazu ausgebildet ist, Daten, die einen Titel bestimmen, unter der Steuerung des Taktgeber-Mikroprozessors (1) und in Übereinstimmung mit den am Taktgeber-Mikroprozessor extern eingegebenen Schlüsselsignalen zu speichern sowie eine Titel-Einfügungs-Startanzeigezeit und eine Titel-Einfügungs-Stoppanzeigezeit für jedes der Programme, die in der ursprünglichen Aufzeichnungsreihenfolge während der Wiedergabe in der ursprünglichen Reihenfolge aufgezeichnet sind, wodurch der Taktgeber-Mikroprozessor und die System-Steuereinheit verschiedene aufgezeichnete Programmed in einer gewünschten Reihenfolge aufzeichnen kann, die sich von der ursprünglichen Aufzeichnungsreihenfolge unterscheidet, und gleichzeitig Zusammenstellungsprogramme zum Einfügen der gespeicherten Titel in die jeweiligen Programme zwischen der jeweiligen Titel-Einfügungs-Startanzeigezeit und der jeweiligen Titel-Einfügungs-Stoppanzeigezeit unter Verwendung der im Speicher gespeicherten Daten durchführen kann.

3. Ein Gerät gemäß Anspruch 2, wobei der Speicher einen ersten Teil (Fig. 4A) umfaßt, der folgendes beinhaltet:
einen ersten Abschnitt (P(Y,START)) für das Speichern von Zählwerten des Taktgeber-Mikroprozessors, die den jeweiligen Startpunkten mehrerer aufgezeichneten Programme entsprechen, einen zweiten Abschnitt (P(Y,STOP)) für das Speichern von Zählwerten des Taktgeber-Mikroprozessors, die den jeweiligen Stopppunkten der aufgezeichneten Programmen entsprechen, einen dritten Abschnitt (P(Y,LIE)) für das Speichern von Flags, die die Setzwerte der jeweiligen Zusammenstellungssprogramme der jeweiligen aufgezeichneten Programme anzeigen;
einen zweiten Teil (Fig. 4B) für das Speichern von Daten, die für die Ausführung von Zusammenstellungsprogrammen geeignet sind, wobei der zweite Teil einen vierten Abschnitt (T(X,0)) für Zusammenstellungsnummern von jeweiligen aufgezeichneten Programmen umfaßt, einen fünften Abschnitt (T(X,1)) für Zählwerte des Taktgeber-Mikroprozessors, die den jeweiligen Titel-Einfügungs-Start- und -Stoppanzeigezeiten entsprechen, in die die jeweiligen Titel von aufgezeichneten Programmen eingefügt wurden, einen sechsten Abschnitt (T(X,2)) für das Speichern von Flags, die die Setzwerte der jeweiligen Titel-Einfügungs-Start- und -Stoppanzeigezeiten von aufgezeichneten Programmen anzeigen, einen siebten Abschnitt (T(X,3)) für das Speichern der Flags, die die Setzwerte der jeweiligen Titel der aufgezeichneten Programme anzeigen, einen achten Abschnitt (T(X,4)) für das Speichern der jeweiligen Titel-Anzeigezeiten von aufgezeichneten Programmen, und einen neunten Abschnitt (T(X,5)) für das Speichern führender Daten von jeweiligen gespeicherten Titeldaten von gespeicherten Programmen;
und einen dritten Teil (Fig. 4C) für das Speichern der Titeldaten.

## Revendications

1. Procédé pour insérer automatiquement les titres dans des écrans prédéterminés de programmes enregistrés dans un magnétoscope, qui comprend un microprocesseur de minutage (1) comptant de façon continue les signaux de fréquence de cabestan ou impulsions de bobine générés par un mécanisme de magnétoscope (4), un bloc de commande de système (2) communiquant en série avec le microprocesseur de minutage et fournissant en sortie un signal de commande prédéterminé à un système d'asservissement de magnétoscope (3) ainsi qu'au mécanisme de magnétoscope et à une mémoire (9),
procédé comprenant :
• une première étape consistant à lire plusieurs programmes enregistrés d'une bande de magnétoscope, suivant un ordre d'enregistrement initial, à détecter les instants de démarrage et de fin des programmes enregistrés respectifs, en utilisant des valeurs comptées provenant du microprocesseur de minutage et, en réponse à des signaux de clef introduits extérieurement pendant la lecture, à déterminer un instant d'affichage de démarrage d'insertion de titre et un instant d'affichage d'arrêt d'insertion de titre dans les programmes enregistrés, puis à stocker dans la mémoire les instants d'affichage de démarrage et d'arrêt d'insertion de titre ainsi déterminés, ainsi que les instants de démarrage et de fin détectés des programmes enregistrés ;
• une seconde étape consistant à former les titres respectifs des contenus enregistrés, en exécutant un programme de formation de titre d'un programme principal d'affichage sur écran, suivant le signal de clef introduit, et à stocker les titres écrits dans la mémoire ; et
• une troisième étape consistant à assembler les programmes enregistrés dans un ordre voulu différent de l'ordre initial, en utilisant les instants de démarrage et de fin stockés des programmes enregistrés, suivant un programme d'assemblage prédéterminé, et à insérer simultanément les titres stockés respectifs dans les programmes enregistrés réordonnés respectifs, depuis l'instant d'affichage de démarrage d'insertion de titre respectif jusqu'à l'instant d'affichage d'arrêt d'insertion de titre respectif.

2. Appareil pour insérer automatiquement les titres des programmes dans un magnétoscope, comprenant un microprocesseur de minutage (1) destiné à compter les signaux de fréquence de cabestan ou impulsions de bobine générés par un mécanisme de magnétoscope (4) monté dans le magnétoscope et générant un signal de commande en réponse à un signal de clef introduit extérieurement, de manière à exécuter un programme d'assemblage pour réordonner les programmes enregistrés suivant un ordre d'enregistrement initial, dans un autre ordre d'enregistrement, et à insérer les titres dans les programmes enregistrés réordonnés respectifs, un bloc de commande de système (2) destiné à communiquer en série avec le microprocesseur de minutage et à fournir en sortie un signal de commande à un système d'asservissement de magnétoscope (3) ainsi qu'au mécanisme de magnétoscope, un circuit de commande d'affichage sur écran (6) destiné à introduire les titres dans des écrans prédéterminés des programmes enregistrés, suivant le signal de commande provenant du microprocesseur de minutage, et un bloc d'affichage (5) destiné à afficher les conditions de fonctionnement du magnétoscope et le temps, suivant le signal de commande provenant du microprocesseur de minutage,
appareil caractérisé en ce qu'
il comprend en outre :
• une mémoire destinée à stocker, sous la commande du microprocesseur de minutage (1) et suivant les signaux de clef introduits extérieurement dans le microprocesseur de minutage, des données déterminant un titre, un instant d'affichage de démarrage d'insertion de titre et un instant d'affichage d'arrêt d'insertion de titre, pour n'importe lequel des programmes enregistrés dans l'ordre d'enregistrement initial pendant la lecture dans l'ordre initial, de façon que le microprocesseur de minutage et le bloc de commande de système puissent enregistrer plusieurs programmes enregistrés dans un ordre voulu différent de l'ordre d'enregistrement initial, et exécuter simultanément des programmes d'assemblage pour insérer les titres stockés dans les programmes respectifs entre l'instant d'affichage de démarrage d'insertion de titre respectif et l'instant d'affichage d'arrêt d'insertion de titre respectif, grâce à l'utilisation des données stockées dans la mémoire.

3. Appareil selon la revendication 2,
dans lequel
la mémoire comprend une première partie (figure 4A) comprenant :
• une première partie (P(Y, START)) pour stocker des valeurs comptées provenant du microprocesseur de minutage correspondant aux points de démarrage respectifs de plusieurs programmes enregistrés, une seconde partie (P(Y,STOP)) pour stocker des valeurs comptées provenant du microprocesseur de minutage correspondant aux points de fin respectifs des programmes enregistrés, une troisième partie (P(Y,LIE)) pour stocker des drapeaux de signalisation indiquant le réglage des programmes d'assemblage respectifs pour les programmes enregistrés respectifs ;
• une seconde partie (figure 4B) pour stocker des données destinées à exécuter des programmes d'assemblage, cette seconde partie comprenant une quatrième partie (T(X, O)) pour les nombres d'assemblage des programmes enregistrés respectifs, une cinquième partie (T)(X, 1)) pour les valeurs comptées provenant du microprocesseur de minutage correspondant aux instants d'affichage de démarrage et d'arrêt d'insertion de titre respectifs auxquels les titres respectifs des programmes enregistrés sont insérés, une sixième partie (T(X, 2)) pour stocker des drapeaux de signalisation indiquant le réglage des instants d'affichage de démarrage et d'arrêt d'insertion de titre respectifs des programmes enregistrés, une septième partie (T(X,3)) pour stocker des drapeaux de signalisation indiquant le réglage des titres respectifs des programmes enregistrés, une huitième partie (T(X, 4)) pour stocker les instants d'affichage de titre respectifs des programmes enregistrés, et une neuvième partie (T(X, 5)) pour stocker les données de tête des données de titre stockées respectives des programmes enregistrés ; et
• une troisième partie (figure 4C) pour stocker les données de titre.
